# EUROPEAN PATENT APPLICATION

(11) **EP 3 702 609 A1**
(43) Date of publication of application: **02.09.2020**
(21) Application number: 18869861.7
(22) Date of filing: 16.10.2018
(51) Int. Cl.: F03D 3/00, F03D 9/34, F03D 9/45

(54) **WIND POWER INSTALLATION**

(30) Priority: 24.10.2017 RU 2017137229
(71) Applicant: Tyaglin, Denis Valentinovich, Novosibirskaya obl., 630073 (RU)
(72) Inventor: Tyaglin, Denis Valentinovich, Novosibirskaya obl., 630073 (RU)
(74) Representative: Osmans, Voldemars
(86) International application number: PCT/RU2018/000686
(87) International publication number: WO 2019/083411

(57) **Abstract**

This technology relates to the wind industry and is designed to transform the energy of wind motion to mechanical energy of rotation of the blading with subsequent transformation into the electric power. The wind power station comprises the support frame with a shaft fixed on it and the blade system fixed on the shaft. The shaft is able to rotate around the vertical axis and is functionally connected to the power generator. The support frame is designed so that it can be fixed between at least three radially positioned structures. The blade of the said blade system is 20-1000 m2. The wind power station comprises additional blade systems positioned on the said shaft one over another. As the support frame is fixed between three radially positioned structures, the rigidity and durability of the structure is increased; thus, blade systems with larger surface of the blades can be utilized, and several blade systems can be positioned on one shaft. The air corridor formed by the three radially positioned structures generates stronger wind streams at any wind direction. The advantage of the claimed technology is the efficiency improvement of the wind power station.

## Description

### Technical Field

This technology relates to the wind industry and is designed to transform the energy of wind motion to mechanical energy of rotation of the blading with subsequent transformation into the electric power.

### Background Art

'Wind power station' is known from the prior art and contains the housing and the working shaft fixed in the housing and able to rotate freely around the vertical axis, the wind wheel shaped as a flattened cone fixed on the shaft, with blades fixed along the cone lines. The housing contains the support and the bottom plate. The patent of the Russian Federation for utility model No.155147, IPC F03D 3/06, F03D 11/00, published on 20/09/2015.

The common features of the known solution and the claimed solution are as follows:
- a frame;
- a shaft fixed on the frame and able to rotate freely around the vertical axis, functionally connected to the power generator;
- a wind wheel fixed on the shaft.

The distinctive feature of the known solution and the claimed solution is as follows:
- the frame can be fixed between three radially positioned structures.

A weakness of the known technology is low capacity of the wind power station, as the suggested housing construction and the variants of fixing the shaft and the wind mill do not ensure the construction rigidity and the wind power station stability sufficient for the use of the blading with large surface area of the blades.

"SIROTA'S WIND POWER TOWER" is known from the prior art, which has been selected as the closest prior art. The wind power tower includes a support frame encircled by several vertical towers, the ring-shaped platform fixed so, that it can rotate around the vertical axis, and the blades fixed on the ring-shaped platform. The ring-shaped platform is positioned on the support frame in its upper part. The patent of the Russian Federation for invention No.2508470, IPC F03D 3/00, F03D 11/04, published on 27/02/2014.

The common features of the known solution and the claimed solution are as follows:
- a frame;
- a shaft able to rotate freely around the vertical axis, functionally connected to the power generator;
- blades fixed on the ring-shaped platform.

The distinctive feature of the known solution and the claimed solution is as follows:
- the frame can be fixed between three radially positioned structures.

A disadvantage of this technology is high material consumption of the wind power station construction, because, to reach the height of the construction, at which the potential of the wind energy is the most efficient and close to nearly permanent action with very low oscillations, the construction should be nearly 200 meters high. At the same time, the rotation frequency of the ring-shaped platform is to be reduced to exclude the oscillation loads on the overall construction of the wind power station.

### Disclosure of Invention

The object of the claimed solution is to overcome the weaknesses of the known technologies and to create a wind power station with high efficiency and reliability.

The advantage of the claimed solution shall be the efficiency improvement of the wind power station.

The claimed advantage is achieved, because in the structure of the wind power station with at least one support frame with a shaft fixed on it, which is able to rotate around the vertical axis and is functionally connected with a power generator, with the blading fixed on the shaft, the support frame can be fixed between at least three radially positioned structures. The surface area of one blade of the blade system can be within the range of 20-1000 m2. The wind power station can have additional blade systems positioned on the shaft one over another. A blade of the blade system can be shaped, for instance, in the form of a sail.

The rotatable wind power station shaft fixed on the support frame is functionally connected with the power generator by any known technical way to transmit rotation generated by impact of wind on the blades of the blade system into mechanical energy of rotation of the generator with subsequent transformation into the electric power. The power generator can be both directly connected with the rotating shaft or separated, but any known mode of rotation transmission can be utilized. The shaft can be fixed on the frame by any known means, for instance, in two points: in the top and bottom parts of the support frame.

Positioning of the support frame between at least three radially positioned structures with the shaft fixed on the support frame ensures stability and reliability of the whole structure; it enables utilizing blade systems with larger parameters, for example, the surface of one blade can be 20-1000 m2, so that it is possible to reduce the oscillation loads on the wind power station structure and to increase its efficiency and capacity.

Besides, positioning of the support frame between at least three radially positioned radially structures leads to the increase of efficiency of the wind power station, as the air corridor formed by three radially positioned structures results in stronger wind streams at any wind direction to impact the blade system even if it is positioned at such heights where wind streams have no permanent action yet.

To ensure better understanding of the claimed solution it should be mentioned that the radially positioned structures are the structures positioned in the direction of the radius relative to the shaft rotation axis, and are not restricted by such variant of positioning when all structures are positioned at the same distance from the rotation axis. The structures can be positioned at different distances from the shaft rotation axis.

Calculations and mathematical models have demonstrated that the best height of the buildings should be 5 to 800 m, while the first blade system should be fixed at the height of 5-15 m. The blade systems can be positioned on the rotor one over another. In case of such positioning the parameters and the number of the blades shall be calculated separately for different heights of buildings.

The use of the blade system with a vertical axis increases the efficiency of the wind power station and its reliability, because in the case of the wind direction changes, such an arrangement of the blade system with any changes in the direction of the wind will equally well perceive its kinetic energy, while the support frame where this system is fixed (the same as the whole wind power station structure) suffers less intensive loads from the wind stream.

The wind power station can be equipped with a fairing able to redirect the air stream to the blades, thus increasing the wind power station efficiency. The fairing can be fixed on the support frame.

### Brief Description of Drawings

The invention is explained below with reference to exemplary embodiments illustrated in the drawing.
Figure 1 represents the top view.
Figure 2 represents the lateral side view.

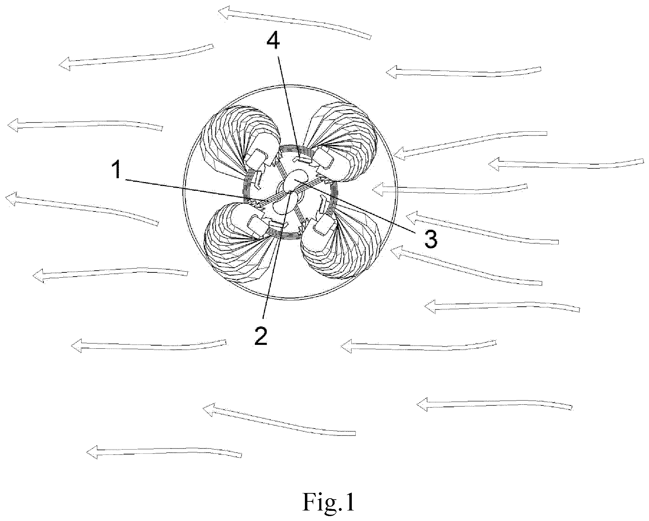

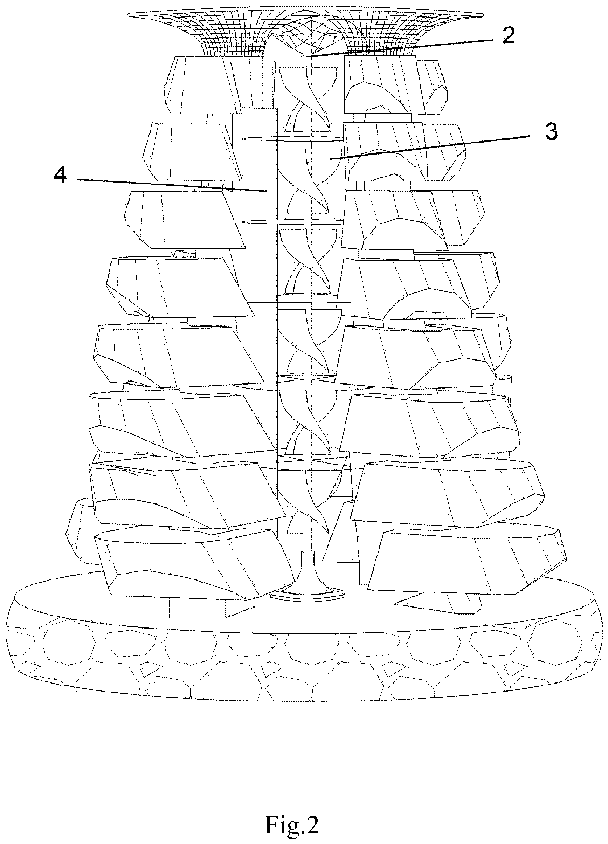

In Figures 1 and 2 the following legend is applied to the positions: 1 - support frame, 2 - shaft, 3 - blade system, 4 - fairing.

### Best Mode for Carrying Out the Invention

The claimed solution shall be used as follows.

Three structures shall be erected in any known method; these three structures can be three multi-storey building designed in such a shape, so that the wind streams can flow around them smoothly. The structures can be positioned both at the same distance from each other and at different distances in such a way that between them some space for the wind power station is formed. Further, the support frame (1) is rigidly fixed to the base frame of the structures at three points at a pre-calculated height, for instance, for an 80-storey building the bottom blade system can be fixed at the height of 8 meters. Further, the shaft (2) with the vertical rotation axis is fixed on the support frame (1) and functionally connected with a power generator. On the shaft (2) the blade system (3) shall be positioned. The characteristics and the number of blades are to be calculated based on the wind characteristics of the area, the power demand, the height of buildings, etc. The air corridor formed by the three structures intensifies the air streams at any wind direction. Getting in contact with the streamlined elements, these air streams are directed into the central part where the blade system (3) is positioned, which absorbs the wind motion energy, rotates and transmits the motion to the shaft (2) and to the power generator, where the rotation energy is transformed into the electrical energy. According to mathematical calculation, this wind power station with 7-8 blade systems positioned one over another on the shaft fixed on the support frame between 80-storeyed buildings is able to cover the demand in power energy of three 80-storeyed buildings generating at least 7.5 MW by each blade system. Power accumulators can be connected to the power generator. Next, the wind power station can be equipped with a fairing (4) able to redirect the coming air stream to the blades.

The presented drawings and the description of the structure do not limit the possible design options and do not restrict the scope of the claimed technology by any means. Alternative designs within the scope of the claims are possible.

## Claims

1. The wind power station comprising at least one support frame with a shaft fixed on it, which is able to rotate around the vertical axis and is functionally connected with a power generator and the blade system fixed on the shaft, wherein the support frame is designed so that it can be fixed between at least three radially positioned structures.

2. The wind power station according to claim 1, wherein one blade of the said blade system is 20-1000 m².

3. The wind power station according to claim 1, wherein it comprises additional blade systems positioned on the said shaft one over another.
